Europäisches Patentamt

**European Patent Office**

**Office européen des brevets**

(11) Numéro de publication: **0 122 227**
A1

# DEMANDE DE BREVET EUROPEEN

(21) Numéro de dépôt: **84810130.9**

(22) Date de dépôt: **20.03.84**

(51) Int. Cl.³: **H 02 M 5/45,** H 02 M 7/515

(30) Priorité: **05.04.83 CH 1838/83**

(43) Date de publication de la demande: **17.10.84**
**Bulletin 84/42**

(84) Etats contractants désignés: **DE FR GB IT**

(71) Demandeur: **M.E.S.A. Marcel Etter S.A., Place de la Gare, CH-1286 Coppet (CH)**

(72) Inventeur: **Etter, Marcel, Chemin des Pontets 3 bis, CH-1212 Grand-Lancy (CH)**

(74) Mandataire: **Ardin, Pierre et al, PIERRE ARDIN & CIE 22, rue du Mont-Blanc, CH-1211 Genève 1 (CH)**

(54) **Circuit d'alimentation à tension réglable.**

(57) Le circuit d'alimentation est destiné à fournir une tension réglable aux bornes (1) et (2) d'un pont onduleur (A). Ce circuit comprend un redresseur (6) dont la sortie en courant continu est appliquée sur deux condensateurs en série (C1, C2) définissant entre eux un point (7) de potentiel médian. Le courant de sortie est contrôlé par deux transistors (8, 9) qui sont alternativement rendus conducteurs. Les deux bornes de sortie du circuit sont reliées par deux diodes (D3, D4) branchées en série et dont le point de jonction est relié au point (7) de potentiel médian.

Par cette disposition, les transistors de puissance (8 et 9) ne sont pas soumis à des tensions élevées et peuvent donc être constitués par des composants peu coûteux. De plus, par la commande alternée pour transistors (8 et 9), l'ondulation de la tension aux bornes du pont onduleur est réduite de moitié.

## CIRCUIT D'ALIMENTATION A TENSION REGLABLE

L'invention se rapporte à un circuit d'alimentation à tension réglable d'un appareil électrique, notamment pour l'alimentation d'un pont onduleur, ce circuit comprenant deux bornes d'entrée et deux bornes de sortie positives et négatives, ce circuit étant relié à une source de tension continue et à une prise de potentiel médian entre ses pôles positif et négatif.

Dans certains appareils, notamment dans les ponts onduleurs utilisés pour produire un courant alternatif à partir d'une source de tension continue pour alimenter un moteur électrique synchrone ou assynchrone avec un courant de fréquence variable, il est nécessaire de modifier l'amplitude de la tension d'alimentation proportionnellement à sa fréquence, afin d'éviter la saturation magnétique du moteur. Lorsque le pont est alimenté par une tension continue intermédiaire fixe, la variation de tension d'alimentation du moteur est généralement obtenue par la commutation, à fréquence élevée, des transistors ou thyristors du pont onduleur, selon la technique des impulsions de largeur variable. Cependant, les ponts à transis tors ne penvent être utilisés économiquement que pour les moteurs de faible puissance, limités à 220 V d'alimentation, les transistors pour les tensions supérieures étant insuffisamment performants et trop onéreux. Quant aux solutions à thyristors, à commutation forcée, elles sont encombrantes et coûteuses.

Selon une solution moins coûteuse, on se limite à modifier la tension continue d'alimentation du pont en intercalant un hâcheur entre la source continue fixe et le pont (voir par exemple le brevet suisse 5.66.671), mais il est souvent nécessaire de prévoir un filtre si l'on veut éviter de trop fortes ondulations de la tension à la sortie du pont. Dans ce cas également, la tension que doit pouvoir couper le hâcheur est élevée, ce qui oblige à utiliser des composants relativement coûteux, spécialement si l'on désire effectuer des coupures à fréquence relativement élevée.

L'invention a pour but de permettre de modifier l'amplitude de la tension d'alimentation d'un appareil en utilisant des composants ne devant pas répondre à des exigences élevées, et donc d'un prix relativement bas, et de fournir une forme de tension à la charge diminuant l'ondulation de courant, afin de ne pas avoir besoin de recourir à l'utilisation d'inductance de filtrage.

Dans le circuit, selon l'invention, le but précité est atteint grâce au fait que chaque borne de sortie est reliée à une borne d'entrée par un semi-conducteur à conductibilité commandée, les bornes de sortie étant chacune reliée à la prise de potentiel médian par une diode, dont le sens de conductibilité est dirigé du pôle négatif vers le pôle positif de la source, un dispositif de commande de ces semi-conducteurs agissant sur ceux-ci en alternant les périodes de conductibilité de l'un et de l'autre.

Le dessin annexé représente schématiquement et à titre d'exemple une forme d'exécution de l'objet de l'invention, dans le cas de l'alimentation d'un pont onduleur, fournissant une tension de sortie rectangulaire.

La figure 1 montre le schéma électrique de cette forme d'exécution.

Les figures 2a à 2c sont des diagrammes de signaux électriques.

Un pont onduleur comprend un circuit onduleur A et un circuit d'alimentation B de ce circuit onduleur. Le circuit A est d'un type connu, décrit par exemple dans le brevet US 3.321.697. Cet onduleur comprend trois unités constituées chacune par deux branches en parallèle, une des branches comprenant deux thyristors Th et l'autre comprenant deux diodes D. Les points de jonction des thyristors et des diodes sont reliés à des lignes de sortie de phase R, S, T qui alimentent un moteur M. Les bornes 1 et 2 sont reliées au circuit d'alimentation B et sont respectivement à un potentiel positif et négatif. La tension entre les bornes 1 et 2 peut être réglée par le circuit d'alimentation B.

Comme il est bien connu, il suffit de rendre conducteur un thyristor Th de la rangée supérieure du pont onduleur pour que le potentiel positif positif apparaisse sur la ligne de phase correspondante, un thyristor Th
appartenant à une autre unité et situé dans la rangée inférieure étant alors
rendu conducteur pour appliquer le potentiel négatif à une autre sortie de
phase. Il existe divers circuits connus pour provoquer les mises à l'état
conducteur des différents thyristors Th de sorte que le circuit de commande
de ces thyristors ne sera pas décrit ici.

Avant la mise à l'état conducteur d'un nouveau thyristor, on rend
non conducteur les thyristors qui étaient précédemment conducteurs. Cette
extinction est produite par un circuit d'extinction C qui comprend deux
transistors à basse tension T1 et T2, qui sont branchés en série par l'intermédiaire de l'enroulement secondaire d'un transformateur 3. L'enroulement
primaire de ce transformateur est connecté à une borne d'alimentation
positive 4a et, par l'intermédiaire d'un transistor T3 et d'une résistance R1
à une borne d'alimentation négative 4b. La base du transistor T3 est reliée à
une borne 5 d'amenée d'un signal électrique d'extinction de l'onduleur A, ce
signal étant produit par un circuit de commande qui n'est pas représenté en
détail, car il peut être de tout type connu.

Dans ce circuit d'extinction C, le courant d'extinction qui traverse
l'onduleur A en sens inverse pour éteindre les thyristors Th est fourni par le
transformateur 3 lorsque, sous l'effet d'une impulsion appliquée à la borne 5,
les transistors T1, T2 et T3 sont conducteurs. Le courant d'extinction est
déterminé par la résistance R1 et par le rapport de transformation du
transformateur 3. Ce courant d'extinction n'est fourni que pendant le temps
d'extinction déterminé par la durée de l'impulsion de commande appliquée à
la borne 5.

Le signal appliqué sur la borne 5 est transmis à la base des transistors T1 et T2 par des circuits t et t' permettant de maintenir le potentiel
de commande desdites bases un court instant après la suppression du signal
de commande. Les retards apportés à l'extinction des transistors T1 et T2
sont légèrement différents, par exemple d'une valeur de quelques microsecondes, ce qui suffit pour qu'un transistor soit bloqué avant que l'autre ne
commence sa phase d'extinction. Ceci a pour avantage que la vitesse de

-4-						0122227

montée de la tension (dV/dt) sur les thyristors Th du pont après leur extinction est deux fois plus faible que si les transistors T1 et T2 étaient éteints en même temps. Le risque de rallumage de ces thyristors par courant capacitif interne est donc diminué d'autant.

Ce circuit d'extinction C est avantageux car il permet également d'imposer entre les bornes 1 et 2 du pont onduleur le potentiel désiré lorsque le courant traversant le pont est momentanément réactif et retourne à la source à travers les diodes D1 et D2. En effet, les transistors T1 et T2 peuvent alors être rendus conducteurs, par un circuit non représenté, pour relier les points 1, respectivement 2 au potentiel intermédiaire à travers les diodes D5, respectivement D6, pendant les périodes de blocage des transistors 8, respectivement 9.

Le circuit d'alimentation B comprend un pont redresseur 6, alimenté en courant triphasé. La sortie de ce pont s'effectue sur deux condensateurs C1 et C2, branchés en série. Ces condensateurs ont la même valeur, de sorte que leur point de jonction 7 constitue une prise de potentiel médian entre les sorties positive et négative du redresseur 6.

L'alimentation comprend encore un hâcheur constitué principalement par deux transistors 8 et 9 pontés par des diodes D1 et D2 pour assurer le passage du courant inverse. La prise de potentiel médian est reliée au point de connexion de deux diodes D3 et D4 qui sont connectées en série sur la sortie du hâcheur.

Le fonctionnement du hâcheur est déterminé par un circuit de commande E qui comprend une borne 10 sur laquelle est appliqué un signal de référence qui correspond à l'amplitude désirée pour la tension délivrée par le pont onduleur A. Ce circuit de commande comprend un circuit 11 de mesure de la tension d'entrée du pont onduleur et fournissant le résultat de cette mesure à un comparateur 12 qui reçoit également le signal de référence provenant de la borne 10. Le signal de comparaison est appliqué à un amplificateur 13. Après amplification et filtrage, ce signal vient agir sur un générateur 14 fournissant deux tensions en dents de scie déphasées entre elles de 180°. Le signal de l'amplificateur 13 a pour effet de modifier la pente des signaux en dents de scie, en fonction de l'écart mesuré par le comparateur 12.

Les deux signaux du générateur 14 sont appliqués à deux comparateurs analogiques 15 et 16 pour être comparés au signal de référence de tension qui est appliqué à la borne 10 par des moyens non représentés. Les signaux de sortie des comparateurs 15 et 16 sont utilisés, après avoir traversé un commutateur électronique 17, pour provoquer un fonctionnement alternatif des transistors 8 et 9 du hâcheur. Le commutateur est piloté par un circuit 18 comprenant une bascule bistable qui est pilotée par le signal appliqué à la borne 5 pour provoquer l'extinction du pont A. De cette façon, les comparateurs 15 et 16 sont respectivement reliés aux transistors 8 et 9 pendant une période s'étendant d'une extinction du pont à la suivante. Après cette extinction, le commutateur 17 fonctionne et les comparateurs 15 et 16 sont alors respectivement reliés aux transistors 9 et 8 jusqu'à la prochaine extinction.

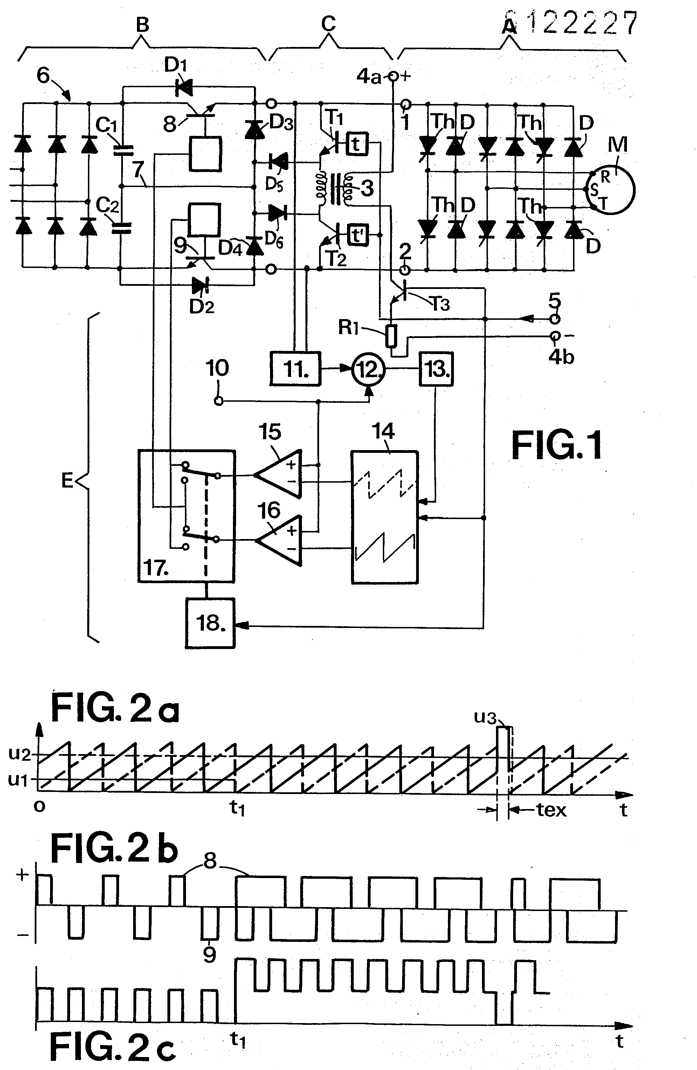

Les figures 2a à 2c sont des schémas explicatifs du fonctionnement du circuit E de commande. La figure 2a montre en fonction du temps t, les signaux en dents de scie du générateur 14, un de ces signaux étant tracé en ligne continue, et l'autre en pointillé. La figure 2a montre également la tension de référence qui est appliquée aux comparateurs 15 et 16. On a donné à cette tension une faible valeur $u_1$ jusqu'au temps $t_1$, puis une valeur $u_2$ plus élevée à partir du temps $t_1$.

La figure 2b illustre le fonctionnement des transistors 8 et 9 du hâcheur, compte tenu de la polarité du potentiel appliqué aux bornes 1 et 2 respectivement.

La figure 2b illustre le fonctionnement des transistors 8 et 9 du hâcheur, compte tenu de la polarité du potentiel appliqué aux bornes 1 et 2 respectivement.

La figure 2c montre la tension appliquée aux bornes 1 et 2 du pont onduleur A par suite du fonctionnement des transistors 8 et 9.

En référence à la figure 2a, chaque fois que l'un des signaux du générateur 14 est plus petit que la tension de référence $u_1$, respectivement $u_2$, le transistor 8 ou 9 est mis en fonction, ce qui donne le diagramme de fonctionnement selon la figure 2b. Lorsque le transistor 8 est conducteur, le potentiel positif de la source est appliqué à la borne 1 du pont onduleur. Le courant traversant le pont onduleur et le moteur M revient par la borne 2, puis passe par la diode D4 pour atteindre la prise 7 de potentiel médian. Lorsque le transistor 9 est conducteur, le transistor 8 étant bloqué, la tension du condensateur C2 provoque le passage d'un courant par la diode D3, à travers le pont A, le retour au pôle négatif se faisant par le transistor 9.

Lorsque les deux transistors 8 et 9 sont simultanément bloqués, les condensateurs C1 et C2 n'ont pas à fournir d'énergie au pont onduleur A et la tension entre les bornes 1 et 2 s'annule.

On voit que l'alimentation du pont peut se faire, soit par le transistor 8 ou par le transistor 9, ou soit par les deux en même temps. La figure 2c illustre l'application de la tension aux bornes d'entrée du pont et l'on voit que de l'origine jusqu'au temps tl, on obtient des impulsions séparées correspondant à l'écart de tension entre un des pôles de la source et la prise de potentiel médian.

A partir du temps $t_1$, on a supposé que la tension de référence a une valeur $u_2$ relativement grande, de sorte que les périodes de fonctionnement des transistors 8 et 9 sont beaucoup plus longues et se recouvrent partiellement. La tension à l'entrée du pont est donnée par un hâchage entre la tension de la source et la moitié de cette tension.

Lorsque le signal d'extinction est appliqué sur la borne 5, pendant le temps t ex, les signaux du générateur 14 sont bloqués et remplacés par une tension relativement élevée. Cette tension a pour effet d'amener les deux transistors 8 et 9 à l'état non conducteur, ce qui est indispensable pendant la durée où le courant d'extinction est appliqué aux bornes 1 et 2 du pont. Après le blocage des transistors T1-T2, la tension $u_3$ disparaît mais, grâce à un élément temporisateur non représenté en détail, un petit décalage est obtenu entre les deux signaux fournis par le générateur 14. Ainsi à la fin de l'extinction, le générateur 14 fonctionne de nouveau en repartant de ses conditions de réglage initiales, mais avec le léger décalage qui vient d'être mentionné. Ceci permet d'éviter une mise à l'état conducteur simultané des deux transistors 8 et 9 qui peut se produire dés que la tension du pont A doit être supérieure à la moitié de la tension d'alimentation. Il en résulte une diminution de la vitesse de montée de tension aux bornes 1 et 2 (dV/-dt) et, par conséquent, une diminution du risque de réallumage intempestif d'un ou plusieurs thyristors Th du pont onduleur.

Pendant l'impulsion d'extinction, le commutateur électronique 17 a effectué une commutation, de sorte que les signaux qui étaient appliqués au transistor 8 sont appliqués maintenant au transistor 9 en vice-versa. Par cette mesure, les différences de temps de conduction entre les semi-conducteurs 8 et 9 se compensent et l'on obtient, sur un intervalle de temps recouvrant plusieurs périodes d'extinction, un fonctionnement parfaitement symétrique du circuit d'alimentation.

Le circuit d'alimentation a été décrit ci-dessus en combinaison avec un pont onduleur à thyristors, mais il est clair qu'il peut également alimenter des ponts onduleurs utilisant d'autres semi-conducteurs commandés supportant des tensions élevées à l'état bloqué, mais peu adaptés à la commutation à fréquence élevée sous tension élevée.

C'est le cas en particulier de ponts à transistors "Darlington", dont l'utilisation permet d'éviter le circuit d'extinction.

Le circuit d'alimentation décrit peut être avantageux non seulement pour l'alimentation de ponts onduleurs, mais également pour d'autres appareils devant être alimentés à tension réglable à partir d'une source de tension continue élevée.

Bien entendu, il est possible de prévoir de nombreuses variantes du circuit décrit. Notamment, en modifiant quelque peu le circuit de commande E, on pourrait réaliser un convertisseur à courant imposé, tout en maintenant le principe de la commande alternée du transistor 8 et 9. Dans ce cas, le circuit de commande devrait être piloté par le courant passant dans le pont et non pas par la tension aux bornes de celui-ci.

- 9 -

0122227

## REVENDICATIONS

1. Circuit d'alimentation à tension réglable d'un appareil électrique, notamment pour l'alimentation d'un pont onduleur, ce circuit comprenant deux bornes d'entrée et deux bornes de sortie positives et négatives, ce circuit étant relié à une source de tension continue et à une prise de potentiel médian entre ses pôles positif et négatif, caractérisé en ce que chaque borne de sortie est reliée à une borne d'entrée par un semi-conducteur à conductibilité commandée, les bornes de sortie étant chacune reliées à la prise de potentiel médian par une diode, dont le sens de conductibilité est dirigé du pôle négatif vers le pôle positif de la source, un dispositif de commande de ces semi-conducteurs agissant sur ceux-ci en alternant les périodes de conductibilité de l'un et de l'autre.

2. Circuit selon la revendication 1, caractérisé en ce que ses bornes d'entrées sont reliées entre elles par deux condensateurs en série, de valeurs sensiblement égales, et dont le point de jonction constitue la prise de potentiel médian reliée aux dites diodes.

3. Circuit selon la revendication 2, caractérisé en ce que le dispositif de commande des semi-conducteurs comprend un générateur fournissant deux signaux en dents de scie déphasés de 180° entre eux, chacun de ces signaux étant appliqué à une entrée d'un comparateur, dont l'autre entrée reçoit une tension de référence, définissant l'amplitude désirée de la tension d'alimentation de l'appareil, les signaux de sortie de ces comparateurs étant utilisés respectivement comme signal de commande pour chacun des semi-conducteurs.

4. Circuit selon la revendication 3, pour l'alimentation d'un pont onduleur comprenant plusieurs unités constituées chacune par deux branches en parallèles, l'une des branches comprenant deux thyristors en série, l'autre branche comprenant deux diodes en série, le sens de conductibilité de la branche comportant les diodes étant inverse de celui de la première

- 10 -

0122227

branche, les points de connexion des éléments en série de chaque branche étant reliés à une borne de sortie de phase du pont, toutes les unités étant montées en parallèle du côté alimentation, ce circuit d'alimentation comprenant au moins un circuit d'extinction pour envoyer un courant inverse dans les thyristors lorsque ceux-ci doivent être rendus non conducteurs, caractérisé en ce que le signal commandant l'extinction est appliqué au générateur pour ramener celui-ci dans des conditions initiales prédéterminées.

5. Circuit selon la revendication 2, caractérisé en ce qu'il comprend des moyens pour inverser périodiquement les commandes des semi-conducteurs.

6. Circuit selon les revendications 4 et 5, caractérisé en ce que les moyens pour inverser les commandes des semi-conducteurs sont constitués par un commutateur électronique piloté par ledit signal de commande de l'extinction.

7. Circuit selon la revendication 1, pour l'alimentation d'un pont onduleur à thyristors, dont le circuit d'extinction comprend deux semi-conducteurs en série à conductibilité commandée, caractérisé en ce qu'il comprend un circuit de commande des semi-conducteurs d'extinction, ce circuit de commande comprenant au moins un élément temporisateur pour retarder le retour à l'état non-conducteur d'un semi-conducteur d'extinction par rapport à l'autre.

8. Circuit selon la revendication 1, pour l'alimentation d'un pont onduleur à thyristors, ce circuit comprenant un circuit d'extinction constitué par deux semi-conducteurs commandés en série, caractérise en ce que le courant dans chaque semi-conducteur d'extinction est amené sur le point médian par l'intermédiaire d'une diode, chaque semi-conducteur d'extinction étant susceptible d'être rendu conducteur pour relier, en cas de courant réactif provenant du pont onduleur, la borne correspondante de sortie avec le point médian, une impulsion de tension négative d'extinction étant appliquée entre les deux semi-conducteurs d'extinction uniquement pendant le temps d'extinction des thyristors du pont.

9.    Circuit selon la revendication 1, caractérise en ce que le dispositif de commande est agencé de façon à permettre un recouvrement total des périodes de conductibilité des deux semi-conducteurs, ce dispositif de commande comprenant au moins un élément temporisateur pour retarder la mise à l'état conducteur d'un des semi-conducteurs par rapport à l'autre lorsque les deux semi-conducteurs doivent être rendus conducteurs simultanément.

FIG.1

FIG.2a

FIG.2b

FIG.2c

0122227

Office européen
des brevets

**RAPPORT DE RECHERCHE EUROPEENNE**

Numéro de la demande

EP 84 81 0130

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 900 338 (MITSUBISHI DENKI) <br> * Page 6, alinéa 4 - page 7, alinéa 3 * | 1,4 | H 02 M 5/45 <br> H 02 M 7/515 |
| A | US-A-4 236 201 (OKADO) <br> * Colonne 2, lignes 22-52 * | 1,4 | |
| A | WO-A-8 101 777 (HOLGER KROHN) <br> * Page 3, alinéa 3 * | 1 | |
| A | DE-A-3 027 280 (RUDI REDMER) <br> * Page 4, alinéa 3 * | 2,4 | |

--- 

| | | | DOMAINES TECHNIQUES RECHERCHES (Int. Cl. 3) |
|---|---|---|---|
| | | | H 02 M |

Le présent rapport de recherche a été établi pour toutes les revendications

| Lieu de la recherche <br> LA HAYE | Date d'achèvement de la recherche <br> 14-06-1984 | Examinateur <br> KERN H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82